# EUROPÄISCHE PATENTANMELDUNG

(11) **EP 2 952 456 A1**
(43) Veröffentlichungstag der Anmeldung: **09.12.2015**
(21) Anmeldenummer: 14170839.6
(22) Anmeldetag: 02.06.2014
(51) Int. Cl.: B65G 57/00

(54) **Vorrichtung zum Ausrichten von auf einer rechteckigen Palette gestapelten Gegenständen**

(71) Anmelder: Stickler Immobilien GmbH, 4407 Steyr (AT)
(72) Erfinder: Stickler, Andre, 4400 Steyr, (AT)
(74) Vertreter: Jell, Friedrich

(57) **Zusammenfassung**

Die Erfindung betrifft eine Vorrichtung (1) zum Ausrichten von auf einer rechteckigen Palette (4) gestapelten Gegenständen (2, 3) mit mindestens einem Antrieb (9, 10), mit wenigstens einer vom Antrieb (9, 10) angetriebenen Linearführung (5, 6) und mit mindestens zwei einander gegenüberliegenden Anschlägen (11 bzw. 13), die jeweils mit der Führung (5, 6) verbunden aufeinander zu und voneinander weg bewegbar ausgebildet sind, um zur Ausrichtung der auf der Palette (4) gestapelten Gegenstände (2, 3) zusammenzuwirken. Um eine sichere und rasche Ausrichtung zu erreichen, wir vorgeschlagen, dass die einander gegenüberliegenden, abgewinkelte Anschlagflächen aufweisenden Anschläge (11 bzw. 13) diagonal zur rechteckigen Palette (4) und auf die jeweilige, vertikal verlaufende Kante (15) der Palette (4) anschlagbar geführt sind.

## Beschreibung

Die Erfindung betrifft eine Vorrichtung zum Ausrichten von auf einer rechteckigen Palette gestapelten Gegenständen mit mindestens einem Antrieb, mit wenigstens einer vom Antrieb angetriebenen Linearführung und mit mindestens zwei einander gegenüberliegenden Anschlägen, die jeweils mit der Führung verbunden aufeinander zu und voneinander weg bewegbar ausgebildet sind, um zur Ausrichtung der auf der Palette gestapelten Gegenstände zusammenzuwirken.

Die EP 1321396A1 zeigt eine Vorrichtung zum Stapeln einzelner Gegenstände auf einer Palette. Dazu werden in einer Reihe ausgerichtete Gegenstände auf eine Hilfsplattform über der Palette befördert. Anschließend wird die Reihe von Gegenständen über drei seitliche, über Linearantriebe aufeinander zubewegbare Anschläge auf der Palette gegenüber anderen Gegenständen ausgerichtet. Damit kann eine ausgerichtete Lage an Gegenständen auf der Palette erreicht werden. Aufgrund der reihenweisen Ausrichtung kann diese Vorrichtung jedoch kurze Taktzeiten nicht erreichen. Zudem kann eine ungenau positionierte Palette zum Umstand führen, dass zwar die Gegenstände zueinander ausgerichtet sind, die Ausrichtung der Gegenstände gegenüber der Palette aber scheitert. Ein reproduzierbares, exaktes Ausrichten von Gegenständen auf einer Palette kann durch solch eine bekannte Vorrichtung daher nicht gewährleistet werden, was in weiterer Folge zudem die Transportsicherheit gefährden kann.

Der Erfindung liegt somit die Aufgabe zugrunde, ausgehend vom eingangs geschilderten Stand der Technik, eine konstruktiv einfache Vorrichtung zu schaffen, die - selbst bei kurzen Taktzeiten - Gegenstände reproduzierbar nicht nur auf einer Palette, sondern diese Gegenstände auch gegenüber der Palette zuverlässig ausrichten kann.

Die Erfindung löst die gestellte Aufgabe dadurch, dass die einander gegenüberliegenden, abgewinkelte Anschlagflächen aufweisenden Anschläge diagonal zur rechteckigen Palette und auf die jeweilige, vertikal verlaufende Kante der Palette anschlagbar geführt sind.

Sind die einander gegenüberliegenden, abgewinkelte Anschlagflächen aufweisenden Anschläge diagonal zur rechteckigen Palette und auf die jeweilige, vertikal verlaufende Kante der Palette anschlagbar geführt, kann eine besonders schnelle und genaue Ausrichtung von Gegenständen auf einer rechteckigen Palette erreicht werden. Vorteilhaft kann auf diese Weise nämlich ein sicheres Halten bzw. Verändern der Lage von Gegenständen erfolgen. Dies liegt unter anderem auch daran, dass in der erfindungsgemäßen Vorrichtung Anschläge vorgesehen sein können, die abgewinkelte Anschlagflächen aufweisen, und somit Gegenstände durch einen Anschlag vorteilhaft an mehreren Seiten angegriffen, eventuell sogar zumindest teilweise umfasst, werden. Aber auch hinsichtlich der konstruktiven Einfachheit der Vorrichtung sind Verbesserungen erreichbar - etwa, da im Gegensatz zum Stand der Technik die Größe der Anschläge verringerbar ist. Erfindungsgemäß kann des Weiteren sichergestellt werden, dass auf die Palette zubewegte Anschläge - weil diese an die vertikal verlaufenden Kanten der Palette anschlagbar vorgesehen sind - selbst eine ungenau vorpositionierte Palette gemeinsam mit den Gegenständen ausrichten bzw. die Palette zusammen mit den Gegenständen zentrieren kann. Es wird somit auch eine Vorrichtung zur Verfügung gestellt, die dafür sogen kann, dass nach einem Ausrichten keine Gegenstände der Palette vorstehen. Eine zuverlässige bzw. reproduzierbare Ausrichtung, sowohl der Gegenstände auf einer Palette als auch der Gegenstände gegenüber der Palette, kann durch die erfindungsgemäße Vorrichtung somit gewährleistet werden. Die genannten Vorteile können sich auch insofern bewähren, wenn Gegenstände auf einen Gegenstand, der bereits zur Palette ausgerichtet wurde, nachfolgend auf diesen gestapelt wird. Als weitere wesentliche Verbesserung kann solch ein gleichzeitiges bzw. gemeinsames Ausrichten von Palette und Gegenständen auch kurzen Taktzeiten gewährleisten.

Weisen die Anschläge eine um 90 Grad abgewinkelte Anschlagfläche auf, können diese wie vorstehend bereits erwähnt Gegenstände - insbesondere rechteckigebesonders vorteilhaft angreifen und diese teilweise eventuell sogar umfassen, sodass deren sichere Ausrichtung bewerkstelligt wird.

Konstruktive Vereinfachungen und kostengünstige Herstellung können sich ergeben, wenn mindestens ein Anschlag als Winkelprofil ausgeführt ist.

Sind die beiden einander gegenüberliegenden Anschläge auf einer gemeinsamen Führung gelagert, kann das Zentrieren der Gegenstände auf der Palette besonders schnell und genau erfolgen, da die Gegenstände, unabhängig von deren außermittigen Platzierung auf der Palette, von den gemeinsam geführten Anschlägen auf ihre ausgerichtete Position verlagert werden. Auch hinsichtlich des Konstruktionsaufwands ergeben sich Vereinfachungen.

Bewegt ein Antrieb über ein biegeweiches Zugmittel beide gegenüberliegenden Anschläge, wobei ein Anschlag am Lasttrum des Zugmittels und der andere Anschlag am Leertrum des Zugmittels befestigt ist, kann auf konstruktiv einfache Weise ein Antrieb für zwei Anschläge genutzt werden, was zu einer kostengünstigeren Vorrichtung führen kann.

Weist das biegeweiche Zugmittel zumindest zwei Zugmittelführungen neben der Führungsbahn des Führungselements auf, kann die Zugmittelführung so gestaltet werden, dass trotz der in Richtung Palettenzentrum zusammenlaufenden Führungselemente diese nicht mit dem rücklaufenden Zugmittel in Berührung kommen. Diese konstruktiv einfache Zugmittelbahn kann dementsprechend eine hohe Funktionssicherheit samt weiterer Kostenreduktion bewirken.

Im Allgemeinen wird festgehalten, dass Laufkatzen als Führungselemente für die Anschläge verwendet werden können, aber auch andere Führungselemente mit Gleit- oder Wälzführung denkbar sind.

Eine konstruktiv einfache und vorteilhafte Ausführung der Vorrichtung kann sich ergeben, wenn die Führung zwei parallele Führungsbahnen aufweist, an denen sich ein jeweiliger Anschlag über dessen Anschlagenden abstützt. So können oberes und unteres Anschlagende parallel geführt werden - was wiederum eine standfeste Ausrichtung der Gegenstände gewährleisten kann.

Treibt ein Antrieb gemeinsam über eine Welle die jeweiligen Führungselemente der parallelen Führungsbahnen an, können selbst schwere Gegenstände zuverlässig ausgerichtet werden. Ein Verkanten und eine damit verbundene Selbsthemmung des Anschlags -aufgrund der sowohl oberen als auch unteren angetriebenen Führungselemente in den parallelen Führungsbahnen- kann so weitestgehend vermieden werden.

Weist die Vorrichtung vier abgewinkelte Anschlagflächen aufweisende Anschläge auf, von denen sich je zwei Anschläge in einer Diagonalen über die Palette gegenüberliegen, können die auszurichtenden Gegenstände zuverlässig von den winkelförmigen Anschlägen umfasst und in Richtung der ausgerichteten Lage verschoben werden. Dabei kann unter Umständen zu Beginn des Ausrichtvorgangs nur ein Anschlag mit dem Gegenstand in Kontakt kommen. Am Ende des durchgeführten Ausrichtvorgangs können hingegen alle vier Anschläge die vertikal verlaufenden Kanten eines Gegenstands umfassen.

Weist die Vorrichtung ein Rollband auf, können Paletten mit auszurichtenden Gegenständen automatisiert in die Vorrichtung transportiert bzw. nach dem Ausrichtvorgang mit geringem Aufwand weitertransportiert werden, was eine weitere Verringerung der Ausrichttaktzeit bewirken kann.

In den Figuren ist beispielsweise der Erfindungsgegenstand anhand einer Ausführungsvariante näher dargestellt. Es zeigen
- Fig. 1: eine Vorderansicht zu einer Vorrichtung zum Ausrichten gestapelter Gegenstände auf einer rechteckigen Palette,
- Fig. 2: eine Draufsicht auf die Vorrichtung nach Fig. 1,
- Fig. 3: eine Schrägansicht der Vorrichtung nach Fig. 1 und
- Fig. 4: eine Schrägansicht der Vorrichtung mit ausgerichteten Gegenständen.

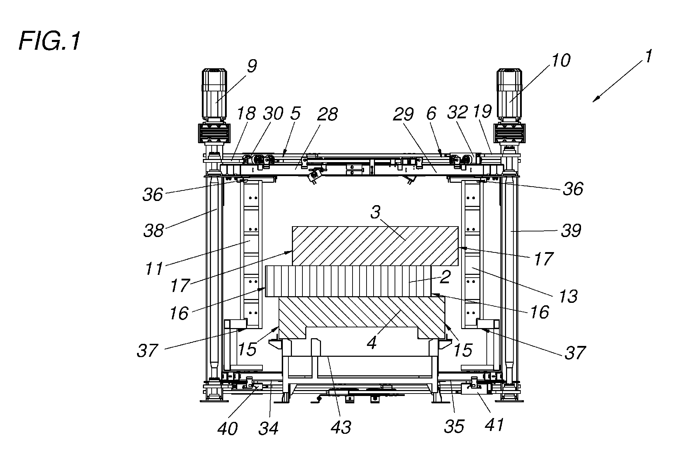

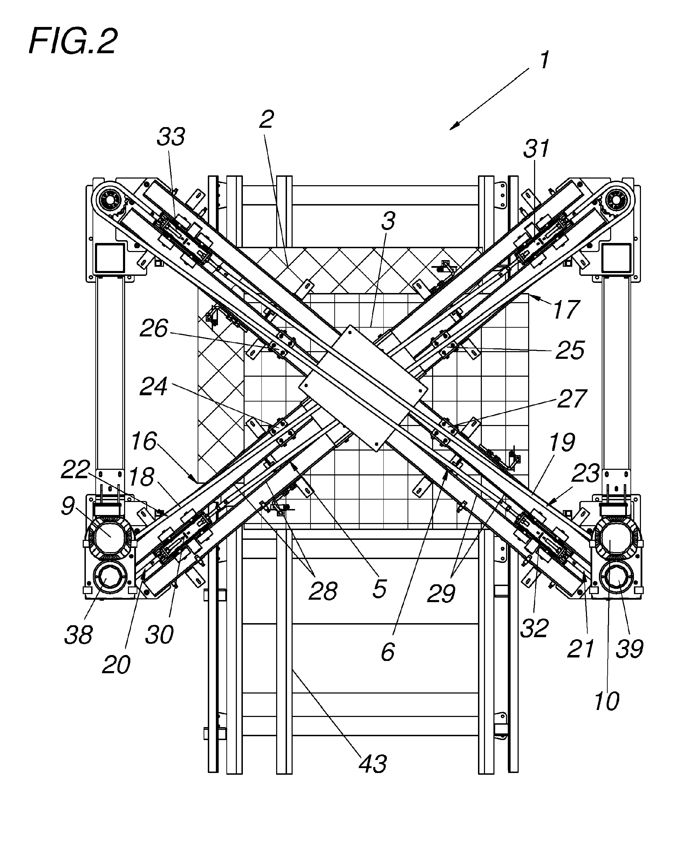

Gemäß Fig. 1 wird die Vorderansicht einer beispielhaften Vorrichtung 1 zum Ausrichten gestapelter Gegenstände 2, 3 auf einer rechteckigen Palette 4 gezeigt. Fig. 2 stellt die zugehörige Draufsicht dar. Die Vorrichtung 1 weist zwei sich überkreuzende Linearführung 5, 6 auf. Zur Ausrichtung der auf der Palette 4 gestapelten Gegenstände 2, 3 treiben zwei Antriebe 9, 10 die gegenüberliegenden Anschläge 11, 12 bzw. 13, 14 an. Die Anschläge 11, 12 bzw. 13, 14 sind dabei mit den Führungen 5 bzw. 6 verbunden und aufeinander zu- und wieder voneinander wegbewegbar.

Die einander gegenüberliegenden Anschläge 11, 12 bzw. 13, 14 weisen um 90 Grad abgewinkelte Anschlagflächen auf. Des Weiteren sind sie diagonal zur rechteckigen Palette 4 geführt, sodass die Anschläge 11, 12 13, 14 auf die jeweilige vertikale Kante 15 der Palette 4 zubewegbar sind und auf die jeweilige vertikal verlaufende Kante 15 der Palette 4 anschlagen. Anhand der Figur ist erkennbar, dass die Anschlagflächen derart vorgesehen sind, dass diese die vertikal verlaufenden Kanten der Palette 4 teilweise umfassen können. Bei der Bewegung der Anschläge 11, 12 13, 14 in Richtung der jeweiligen Kante 15 der Palette 4 werden die vertikal verlaufenden Kanten 16, 17 der plattenförmigen Gegenstände 2, 3 - nicht zuletzt jeweils durch die Angriffspunkte von mehreren Seiten - zuverlässig von den Anschlägen 11, 12 13, 14 umschlossen und in Richtung Palette 4 ausgerichtet. Dies gewährleistet ein schnelles und reproduzierbares Ausrichten der gestapelten Gegenstände 2, 3. Natürlich sind auch mehrere Ausrichtvorgänge nacheinander möglich, wenn ein weiterer Gegenstand auf bereits zur Palette ausgerichtete Gegenstände auf dies nachfolgend gestapelt wird. Durch die im Ausführungsbeispiel als kostengünstiges Winkelprofil ausgebildeten Anschläge 11, 12 13, 14 werden alle auf der Palette 4 gestapelten plattenförmigen Gegenstände 2, 3 gleichzeitig ausgerichtet - wobei aber auch eine ev. erforderliche Ausrichtung bzw. Zentrierung der Palette 4 selbst erfolgen kann. Somit wird eine effektive Durchführung der Ausrichtung samt kurzen Taktzeiten erreicht.

Die einander gegenüberliegenden Anschläge 11, 12 bzw. 13, 14 sind jeweils auf einer gemeinsamen Führung 5 bzw. 6 gelagert. So können diese Führungen 5, 6 über das Zentrum der Palette 4 verlaufen, wodurch die Konstruktion der Vorrichtung 1 vereinfacht wird. Zudem erfolgt so das Zentrieren der Gegenstände 2, 3 auf der Palette 4 schnell und genau, da die Gegenstände 2, 3 von den gemeinsam geführten Anschlägen 11, 12 bzw. 13, 14 erfasst und ausgerichtet werden. Dies erfolgt unabhängig von einer außermittigen Lage der Gegenstände 2, 3 auf der Palette 4.

Jeweils ein Antrieb 9, 10 bewegt über ein biegeweiches Zugmittel 18, 19 beide einander gegenüberliegenden Anschläge 11, 12 bzw. 13, 14. Dabei ist ein Anschlag 11, 13 am Lasttrum 20, 21 des Zugmittels 18, 19 und der andere Anschlag 12, 14 am Leertrum 22, 23 des Zugmittels 18, 19 befestigt. Dies erlaubt Einsparungen für einen zusätzlichen Antrieb, wodurch die Kosten für die Vorrichtung 1 gesenkt werden.

Das Zugmittel 18, 19 umfasst Zugmittelführungen 24, 25, 26, 27 neben der Führungsbahn 28, 29 des Führungselements 30, 31, 32, 33. So kommen die auf einer Führungsbahn 28 bzw. 29 zusammenlaufenden Führungselemente 30, 31 bzw. 32, 33 nicht mit dem rücklaufenden Zugmittel 18 bzw. 19 in Berührung. Eine dementsprechend gestaltete Vorrichtung 1 zeichnet sich durch eine konstruktiv einfache Führung des Zugmittels 18, 19 bei einer gemeinsamen Führungsbahn 28, 29 aus. Für die deckenseitigen Führungselemente 30, 31, 32, 33 der Anschläge 11, 12, 13, 14 werden in der gezeigten beispielhaften Vorrichtung 1 Laufkatzen verwendet. Aber auch andere Führungselemente 30, 31, 32, 33 mit beispielsweise Gleit- oder Wälzführung sind denkbar.

Die Führung 5, 6 der Anschläge 11, 12, 13, 14 weist je eine obere und eine untere, zueinander parallele Führungsbahn 28, 34 bzw. 29, 35 auf. Über diese stützt sich der jeweilige Anschlag 11, 12, 13, 14 über Anschlagenden 36, 37 ab. Durch die parallele Führung von oberem und unterem Anschlagende 36, 37 erfolgt eine mechanisch standfeste Ausrichtung der Gegenstände 2, 3. Eine hohe Reproduzierbarkeit des Ausrichtvorgangs bei kurzen Taktzeiten wird so erreicht.

Dabei treibt ein Antrieb 9, 10 gemeinsam über eine Welle 38, 39 die jeweiligen Führungselemente 30, 31, 32, 33, 40, 41 sowie die in der Zeichnung nicht dargestellten bodenseitigen Führungselemente der Anschläge 12 und 14 an. Mithilfe der Welle 38, 39 und den parallelen Führungsbahnen 28, 34 bzw. 29, 35 wird der Anschlag 11, 12, 13, 14 so an seinem oberen und unteren Anschlagende 36, 37 angetrieben, wodurch auch schwere Gegenstände 2, 3 zuverlässig ausgerichtet werden. Ein Verkanten, wie beim sogenannten Schubladeneffekt, und eine damit verbundene Selbsthemmung des Anschlags 11, 12, 13, 14 ist aufgrund der anschlagendseitigen angetriebenen Führungselemente 30, 31 32, 33, 40, 41 des Anschlags 11, 12, 13, 14 auszuschließen. Die Reproduzierbarkeit des Ausrichtvorgangs wird dadurch weiter verbessert.

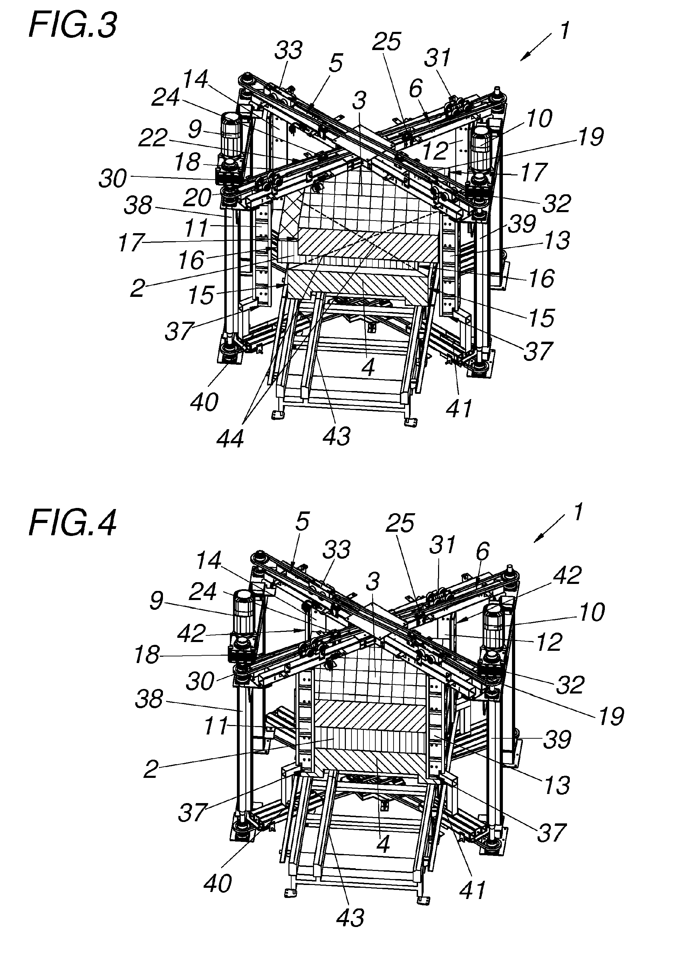

Um die beispielhafte Vorrichtung 1 darzustellen, sind in Fig. 3 und Fig. 4 Schrägsichten der Vorrichtung vor und nach einem Ausrichtvorgang gezeigt. Wie erkennbar, weist die Vorrichtung 1 vier Anschläge 11, 12, 13, 14 mit abgewinkelten Anschlagflächen auf. Diese sind, wie vor allem aus Fig. 4 ersichtlich, als Winkelprofil 42 ausgeführt, wobei sich je zwei Anschläge 11, 12 bzw. 13, 14 entlang einer Diagonalen 44 zur Palette 4 gegenüberliegen. Beim Ausrichtvorgang werden die vertikal verlaufenden Kanten 16, 17 der auszurichtenden Gegenstände 2, 3 so zuverlässig von den Anschlägen 11, 12, 13, 14 umfasst und in Richtung der Ausrichtungslage verschoben. Dabei kann unter Umständen in der Anfangsphase des Ausrichtvorgangs nur ein Anschlag 11, 12, 13, 14 mit dem Gegenstand 2, 3 in Kontakt kommen. Am Ende der durchgeführten Ausrichtung, wie in Fig 4. dargestellt, umfassen hingegen alle vier Anschläge 11, 12, 13, 14 die Kanten der Gegenstände 2, 3. Mittels des Rollbands 43 der Vorrichtung 1 werden Paletten 4 mit auszurichtenden Gegenständen 2, 3 in die Vorrichtung 1 transportiert bzw. nach dem Ausrichtvorgang mit geringem Aufwand weitertransportiert. Effizientes und schnelles Ausrichten von Gegenständen 2, 3 auf unterschiedlichen Paletten 4 mit kurzen Taktzeiten wird so möglich.

## Patentansprüche

1. Vorrichtung zum Ausrichten von auf einer rechteckigen Palette (4) gestapelten Gegenständen (2, 3) mit mindestens einem Antrieb (9, 10), mit wenigstens einer vom Antrieb (9, 10) angetriebenen Linearführung (5, 6) und mit mindestens zwei einander gegenüberliegenden Anschlägen (11, 12 bzw. 13, 14), die jeweils mit der Führung (5, 6) verbunden aufeinander zu und voneinander weg bewegbar ausgebildet sind, um zur Ausrichtung der auf der Palette (4) gestapelten Gegenstände (2, 3) zusammenzuwirken, **dadurch gekennzeichnet, dass** die einander gegenüberliegenden, abgewinkelte Anschlagflächen aufweisenden Anschläge (11, 12 bzw. 13, 14) diagonal zur rechteckigen Palette (4) und auf die jeweilige, vertikal verlaufende Kante (15) der Palette (4) anschlagbar geführt sind.

2. Vorrichtung nach Anspruch 1, **dadurch gekennzeichnet, dass** die Anschläge (11, 12 bzw. 13, 14) eine um 90 Grad abgewinkelte Anschlagfläche aufweisen.

3. Vorrichtung nach Anspruch 1 oder 2, **dadurch gekennzeichnet, dass** mindestens ein Anschlag (11, 12,13, 14) als Winkelprofil (42) ausgeführt ist.

4. Vorrichtung nach Anspruch 1, 2 oder 3, **dadurch gekennzeichnet, dass** die beiden gegenüberliegenden Anschläge (11, 12 bzw. 13, 14) auf einer gemeinsamen Führung (5 bzw. 6) gelagert sind.

5. Vorrichtung nach einem der Ansprüche 1 bis 4, **dadurch gekennzeichnet, dass** ein Antrieb (9, 10) über ein biegeweiches Zugmittel (18, 19) beide gegenüberliegenden Anschläge (11, 12 bzw. 13, 14) bewegt, wobei ein Anschlag (11, 13) am Lasttrum (20, 21) des Zugmittels (18, 19) und der andere Anschlag (12, 14) am Leertrum (22, 23) des Zugmittels (18, 19) befestigt ist.

6. Vorrichtung nach Anspruch 5, **dadurch gekennzeichnet, dass** das jeweilige biegeweiche Zugmittel (18, 19) zumindest zwei Zugmittelführungen (24, 25, 26, 27) neben der Führungsbahn (28, 29) des Führungselements (30, 31, 32, 33) aufweist.

7. Vorrichtung nach einem der Ansprüche 1 bis 6, **dadurch gekennzeichnet, dass** die Führung (5, 6) zwei parallele Führungsbahnen (28, 34 bzw. 29, 35) aufweist, an denen sich ein jeweiliger Anschlag (11, 12,13, 14), über dessen Anschlagenden (36, 37) abstützt.

8. Vorrichtung nach Anspruch 7, **dadurch gekennzeichnet, dass** ein Antrieb (9, 10) gemeinsam über eine Welle (38, 39) die jeweiligen Führungselemente (30, 31 32, 33, 40, 41) der parallelen Führungsbahnen (28, 34 bzw. 29, 35) antreibt.

9. Vorrichtung nach einem der Ansprüche 1 bis 8, **dadurch gekennzeichnet, dass** die Vorrichtung 1 vier abgewinkelte Anschlagflächen aufweisende Anschläge (11, 12, 13, 14) aufweist, von denen sich je zwei Anschläge (11, 12 bzw. 13, 14) in einer Diagonalen (44) über die Palette (4) gegenüberliegen.

10. Vorrichtung nach einem der Ansprüche 1 bis 9, **dadurch gekennzeichnet, dass** die Vorrichtung (1) ein Rollband (43) aufweist.
